# EUROPEAN PATENT SPECIFICATION

(11) **EP 0 721 800 B1**
(45) Date of publication and mention of the grant of the patent: **22.12.1999**
(21) Application number: 95116771.7
(22) Date of filing: 25.10.1995
(51) Int. Cl.: B02C 4/30, B23P 11/02

(54) **Apparatus and process for keying a pair of pins on a roller of a roller mill for grinding cereals**
Vorrichtung und Verfahren zur Befestigung eines Walzenzapfenpaares an der Walze einer Getreidewalzenmühle
Appareil et procédé pour la fixation d'une paire de tourillons au rouleau d'un broyeur à rouleaux pour céréales

(30) Priority: 12.01.1995 IT MI950047
(43) Date of publication of application: 17.07.1996
(73) Proprietor: OCRIM S.p.A., 26100 Cremona (CR) (IT)
(72) Inventor: Stagnati, Gianluigi, I-26100 Cremona (IT)
(74) Representative: Forattini, Amelia

(56) References cited:
- WO-A-90/01135
- CH-A- 420 804
- FR-A- 2 498 478
- FR-A- 2 656 247
- PATENT ABSTRACTS OF JAPAN vol. 6, no. 58 (M-122) [936] , 15 April 1982 & JP-A-57 001626 (HITACHI SEISAKUSHO), 6 January 1982,

## Description

The present invention relates to an apparatus and a process for keying a pair of pins on a roller of a roller mill for grinding cereals.

Mechanical interference-fit coupling processes are known that use cooling to a low temperature to reduce the dimensions of one of the parts to be coupled so as to allow coupling when cold. Heating to ambient temperature automatically produces fit. However, in practice it has been observed that this process is difficult to apply to a roller mill for producing cereals due to the size of the parts involved and due to the danger in handling large metal parts cooled to a low temperature. It is known that the simple contact with such parts can lead to severe physical injury to the operator due to instant freezing.

The aim of the present invention is to overcome the above drawbacks, avoiding every possible danger for operators.

An object is to allow to apply the above mentioned process to roller mills for grinding cereals.

Another object is to provide a coupling of extremely high quality that is capable of ensuring maximum reliability in the demanding operating conditions required by a roller mill for grinding cereals.

This aim, these objects, and others are achieved by an apparatus for keying a pair of pins on a roller of a roller mill for grinding cereals, comprising a cooling device for cooling the pins; a roller supporting body, which allows the roller to rotate about a substantially horizontal axis that lies at right angles to a longitudinal axis of the roller; and a transfer device for transferring the pins from the cooling device to the roller.

Preferably, the interference for coupling between the pins and the roller is between 0.08 mm and 0.125 mm, measured at ambient temperature.

Preferably, the roughness of the mutual contact surfaces of the pins and of the roller is less than 6 microns.

Preferably, the roundness error of a hole of the roller and/or of the pins is lower than 0.02 mm.

The invention furthermore includes a process for keying a pair of pins onto a roller of a roller mill for grinding cereals, which includes the following steps:
a) cooling the pins;
b) placing the roller in a vertical position;
c) transferring one of the cooled pins, keeping it vertically above the roller, and inserting it in a hole of the roller;
d) waiting for the pin to warm and expand;
e) rotating the roller through 180° about a horizontal axis; and
f) transferring the other cooled pin above the roller and inserting it in a hole of the roller.

The invention will become apparent with reference to the accompanying drawings, which are provided as non-limitative example of an embodiment of the invention, and wherein:
Figure 1 is a plan view of the apparatus according to the invention;
Figure 2 is a sectional side view of a detail of the apparatus of Figure 1;
Figure 3 is a front view of a detail of the apparatus of Figure 1; and
Figure 4 is a side view of the detail of Figure 3.

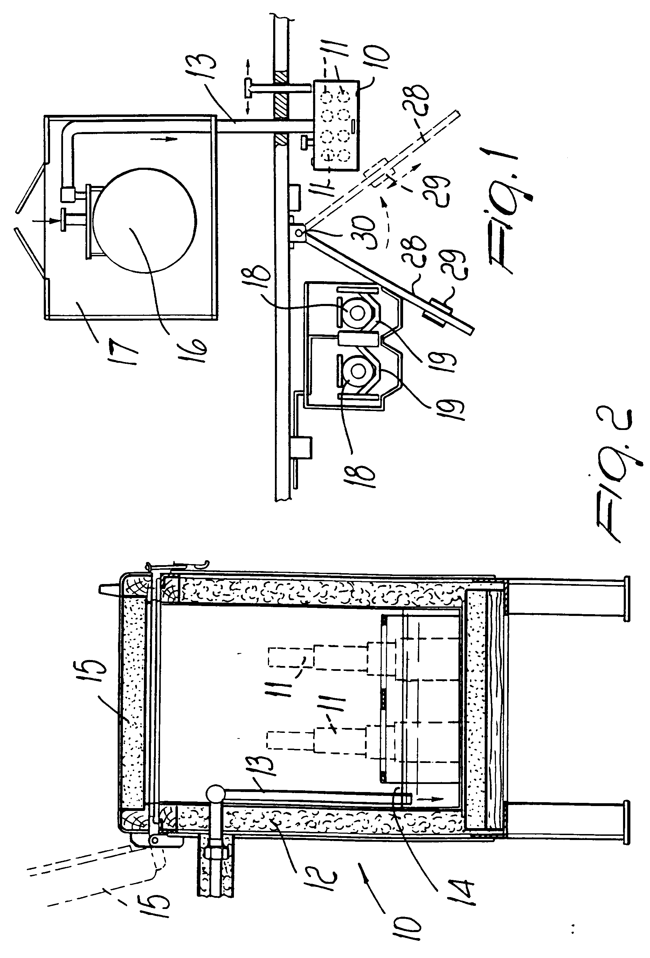

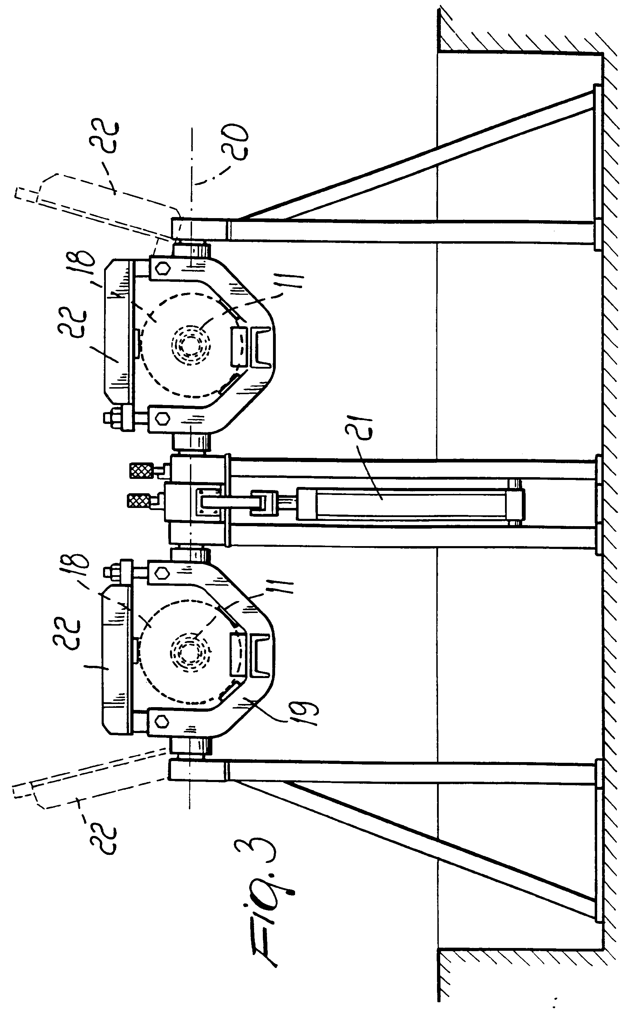

With reference to Figures 1 to 4, the apparatus according to the invention includes a cooling device 10 for cooling the pins 11. The cooling device 10 is constituted by an insulated container 12, inside which liquid nitrogen is introduced through the pipes 13. The pins 11 are arranged vertically inside the container 12. The insulation must be sufficient to prevent the liquid nitrogen from boiling and evaporating through the surface 14. The container 12 is provided with a lid 15 that is closed when the pins 11 do not have to be removed. The pipes 13 are in turn supplied by the reservoir 16, which is protected by the structure 17.

The rollers 18 are supported by the supporting body 19, which is cradle-shaped and can rotate about a substantially horizontal axis 20 that lies at right angles to a longitudinal axis 21 of the roller 18.

The supporting body 19 includes a locking body 22 to lock the rollers 18 inside the supporting body 19, so that the supporting body 19 can rotate through 180° without allowing the rollers 18 to slip out.

This rotation is produced by an actuator which is preferably formed by two pneumatic cylinders 25 and 26 which act by means of the arm 27, which is rigidly connected to the supporting body 19.

Preferably, the supporting body 19 supports multiple rollers that can be rotated simultaneously, so that a single rotation operation allows to key multiple rollers 18 simultaneously.

Furthermore, a transfer device 28 is provided for transferring the pins 11 from the cooling device 10 to the roller 18. This transfer device 28 is preferably constituted by a cantilevered arm which can rotate about the supporting point 30. The slider 29 directly supports the pins 11 and can slide along the arm 28.

The cooling of the pins 11 reaches the boiling temperature of nitrogen at atmospheric pressure and allows to reduce the diameter of the pins enough to allow their easy insertion in the roller while ensuring optimum fit for the purposes of the invention.

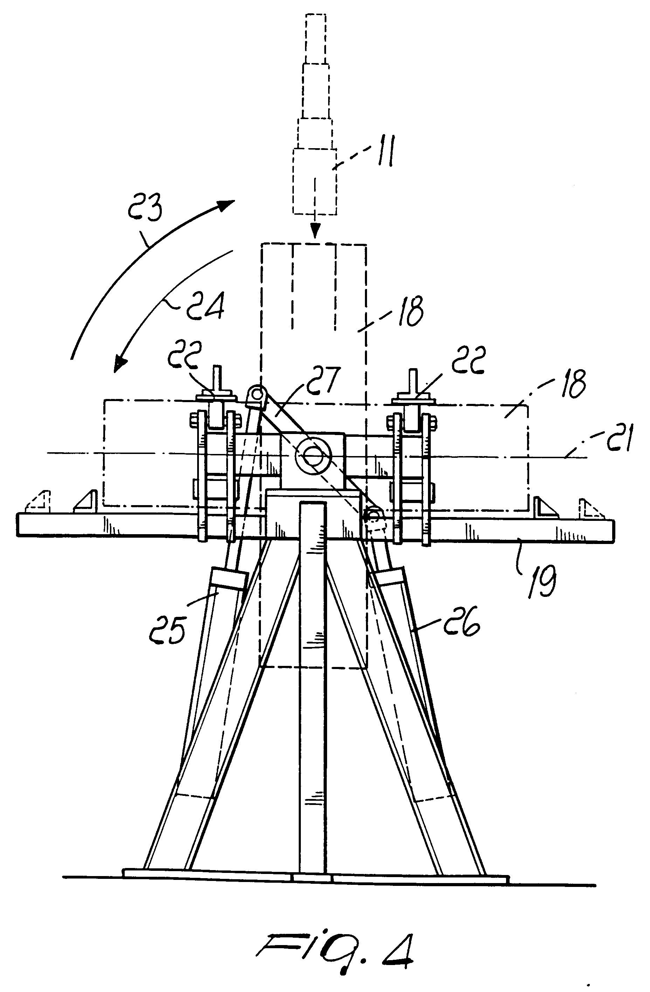

The rotation through 180°, indicated by the arrows 23 and 24, allow to start with the roller 18 and the supporting body 19 in a horizontal position, as shown for example in Figure 3. In this manner it is possible to fix the roller 18 easily on the supporting body 19 by means of the locking body 22. Then a rotation through 90° allows the roller 18 and the supporting body 19 to reach a vertical position, as shown for example in Figures 1 and 4. In this manner it is possible to insert the pin 11 vertically in the roller 18, transferring the pin from the container 12 to the roller 18 by means of the transfer device 28.

After the warming time has elapsed, and once the pin 11 has expanded, a subsequent rotation through 180° in the opposite direction allows to reach the opposite vertical position for inserting the opposite cooled pin.

Finally, after the warming and expansion period of the second pin has elapsed, a rotation through 90° allows to resume the horizontal position to extract the finished roller.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Apparatus for keying a pair of pins (11) on a roller (18) of a roller mill for grinding cereals, comprising: a cooling device (10) for cooling said pins(11) ; a roller supporting body (19), which allows said roller to rotate about a substantially horizontal axis (20) that lies at right angles to a longitudinal axis (21) of said roller (18); and a transfer device (28) for transferring said pins (11) from said cooling device (10) to said roller (18).

2. Apparatus according to claim 1, wherein said cooling device (10) comprises a container (12) of liquid nitrogen.

3. Apparatus according to claim 2, wherein said pins (11) are arranged vertically inside said container (12).

4. Apparatus according to at least one of the preceding claims, wherein said supporting body (19) comprises a locking body (22) to lock said roller (18).

5. Apparatus according to at least one of the preceding claims, wherein said supporting body (19) is actuated by an actuator so as to allow said supporting body to rotate through 180°.

6. Apparatus according to claim 5, wherein said actuator is constituted by a pair of pneumatic cylinders (25,26).

7. Apparatus according to at least one of the preceding claims, wherein said supporting body (19) supports multiple rollers (18) that can rotate simultaneously.

8. Apparatus according to at least one of the preceding claims, wherein the coupling interference between said pins and said roller is between 0.08 mm and 0.125 mm, measured at ambient temperature.

9. Apparatus according to at least one of the preceding claims, wherein the roughness of said mutual contact surfaces of said pins (11) and said roller (18) is less than 6 microns.

10. Apparatus according to at least one of the preceding claims, wherein the roundness error of a hole of said roller (18) and/or of said pins (11) is less than 0.02 mm.

11. Process for keying a pair of pins on a roller of a roller mill for grinding cereals, comprising the following steps:
a) cooling said pins;
b) arranging said roller vertically;
c) transferring one of said cooled pins, keeping it vertically above said roller, and inserting it in a hole of said roller;
d) waiting for said pin to warm and expand;
e) rotating said roller through 180° about a horizontal axis; and
f) transferring the other one of said cooled pins above said roller and inserting it in a hole of said roller.

12. Process according to claim 11, comprising the use of an apparatus according to at least one of claims 1 to 10.

## Patentansprüche

1. Vorrichtung zur Befestigung eines Zapfenpaares (11) an einer Walze (18) einer Getreidewalzenmühle mit: einer Kühlvorrichtung (10) zur Kühlung der Zapfen (11); einen Walzentragekörper (19), welcher der Walze ermöglicht, sich um eine im wesentlichen horizontale Achse (20) zu drehen, welche im rechten Winkel zu einer Längsachse (21) der Walze (18) liegt; und einer Verlagerungsvorrichtung (28) zur Verlagerung der Zapfen (11) von der Kühlvorrichtung (10) zu der Walze (18) hin.

2. Vorrichtung gemäß Anspruch 1, bei welcher die Kühlvorrichtung (10) einen Behälter (12) mit flüssigem Stickstoff aufweist.

3. Vorrichtung gemäß Anspruch 2, bei welcher die Zapfen (11) vertikal innerhalb des Behälters (12) angeordnet sind.

4. Vorrichtung gemäß wenigstens einem der vorherigen Ansprüche, bei welcher der Tragekörper (19) einen Blockierkörper (22) zur Blockierung der Walze (18) aufweist.

5. Vorrichtung gemäß wenigstens einem der vorherigen Ansprüche, bei welcher der Tragekörper (19) von einem Antrieb bewegt wird, um dem Tragekörper zu ermöglichen, sich um 180° zu drehen.

6. Vorrichtung gemäß Anspruch 5, bei welcher der Antrieb von einem Paar pneumatischer Zylinder (25, 26) gebildet ist.

7. Vorrichtung gemäß wenigstens einem der vorherigen Ansprüche, bei welcher der Tragekörper (19) mehrere Walzen (18) trägt, welche sich gleichzeitig drehen können.

8. Vorrichtung gemäß wenigstens einem der vorherigen Ansprüche, bei welcher das Kupplungsspiel zwischen den Zapfen und der Walze zwischen 0,08 mm und 0,125 mm, gemessen bei Umgebungstemperatur, beträgt.

9. Vorrichtung gemäß wenigstens einem der vorherigen Ansprüche, bei welcher die Rauhigkeit der gegenseitigen Kontaktflächen der Zapfen (11) und der Walze (18) weniger als 6 Mikrometer beträgt.

10. Vorrichtung gemäß wenigstens einem der vorherigen Ansprüche, bei welcher der Rundungsfehler eines Loches der Walze (18) und/oder der Zapfen (11) weniger als 0,02 mm beträgt.

11. Verfahren zur Befestigung eines Zapfenpaares (11) an der Walze (18) einer Getreidewalzenmühle, welches die folgenden Schritte aufweist:
a) Kühlung der Zapfen;
b) Anordnung der Walze in einer vertikalen Position;
c) Verlagerung eines der gekühlten Zapfen, Halten desselben vertikal über der Walze und Einschieben in ein Loch der Walze;
d) Abwarten, daß der Zapfen warm wird und sich ausdehnt;
e) Drehen der Walze um 180° um eine horizontale Achse; und
f) Verlagerung des anderen der gekühlten Zapfen über die Walze und Einschieben desselben in ein Loch der Walze.

12. Verfahren gemäß Anspruch 11, welches die Verwendung einer Vorrichtung gemäß wenigstens einem der Ansprüche 1 bis 10 beinhaltet.

## Revendications

1. Dispositif pour fixer un couple de broches (11) sur un rouleau (18) d'un broyeur à rouleaux pour le broyage de céréales, comprenant : un dispositif de refroidissement (10) pour refroidir lesdites broches (11); un corps (19) de support du rouleau, qui permet audit rouleau de tourner autour d'un axe sensiblement horizontal (20) qui est perpendiculaire à un axe longitudinal (21) dudit rouleau (18); et un dispositif de transfert (28) pour transférer lesdites broches (11) depuis ledit dispositif de refroidissement (10) jusqu'audit rouleau (18).

2. Dispositif selon la revendication 1, dans lequel ledit dispositif de refroidissement (10) comprend un réservoir d'azote liquide (12).

3. Dispositif selon la revendication 2, dans lequel les broches (11) sont disposées verticalement à l'intérieur dudit réservoir (12).

4. Dispositif selon au moins l'une des revendications précédentes, dans lequel ledit corps de support (19) comprend un corps de blocage (22) servant à bloquer ledit rouleau (18).

5. Dispositif selon au moins l'une des revendications précédentes, dans lequel ledit corps de support (19) est actionné par un actionneur de manière à permettre audit corps de support de tourner sur 180°.

6. Dispositif selon la revendication 5, dans lequel ledit actionneur est constitué par un couple de vérins pneumatiques (25,26).

7. Dispositif selon au moins l'une des revendications précédentes, dans lequel ledit corps de support (19) supporte de multiples rouleaux (18), qui peuvent tourner simultanément.

8. Dispositif selon au moins l'une des revendications précédentes, dans lequel le jeu de couplage entre lesdites broches et les rouleaux est compris entre 0,08 mm et 0,125 mm, valeur mesurée à la température ambiante.

9. Dispositif selon au moins l'une des revendications précédentes, dans lequel la rugosité desdites surfaces de contact mutuel desdites broches (11) et dudit rouleau (18) est inférieure à 6 micromètres.

10. Dispositif selon au moins l'une des revendications précédentes, dans lequel l'erreur d'arrondi d'un trou dudit rouleau (18) et/ou desdites broches (11) est inférieure à 0,02 mm.

11. Procédé pour fixer un couple de broches sur un rouleau d'un broyeur à rouleaux pour le broyage de céréales, comprenant les étapes suivantes consistant à :
a) refroidir lesdites broches;
b) disposer verticalement ledit rouleau;
c) transférer l'une desdites broches refroidies, la maintenir verticalement au-dessus desdits rouleaux, et insérer de cette broche dans un trou dudit rouleau;
d) attendre que ladite broche s'échauffe et se dilate; e) faire tourner ledit rouleau sur 180° autour d'un axe horizontal, et
f) transférer l'autre desdites broches refroidies au-dessus dudit rouleau et insérer cette broche dans un trou dudit rouleau.

12. Procédé selon la revendication 11, comprenant l'utilisation d'un dispositif selon au moins l'une des revendications 1 à 10.
